# EUROPÄISCHE PATENTSCHRIFT

(11) **EP 2 565 108 B1**
(45) Veröffentlichungstag und Bekanntmachung des Hinweises auf die Patenterteilung: **14.02.2018**
(21) Anmeldenummer: 12006167.6
(22) Anmeldetag: 30.08.2012
(51) Int. Cl.: B62H 1/00, B62H 1/02

(54) **Zweirad mit Hinterbauständer**
Bicycle with rear end stand
Deux-roues avec support de structure arrière

(30) Priorität: 30.08.2011 DE 202011104976 U
(43) Veröffentlichungstag der Anmeldung: 06.03.2013
(73) Patentinhaber: Pending System GmbH & Co. KG, 95679 Waldershof (DE)
(72) Erfinder: Dauth Gregor,, 95615 Marktredwitz (DE); Grimmig Fabien,, 95679 Waldershof (DE)
(74) Vertreter: Herden, Andreas F.

(56) Entgegenhaltungen:
- CN-A- 102 009 712
- CN-U- 201 587 466
- CN-Y- 201 053 349
- DE-U1- 20 108 732
- DE-U1-202006 009 295
- JP-A- 2011 051 421
- US-A- 4 556 230
- US-A- 4 834 405
- US-A1- 2008 143 074

## Beschreibung

Die vorliegende Erfindung betrifft ein Zweirad, insbesondere ein Fahrrad, ein Mountainbike, ein Rennrad oder ein Treckingrad, mit einem als Stützvorrichtung ausgebildeten Hinterbauständer, welcher im Bereich des Ausfallendes des Hinterbaus mit dem Zweirad verbunden sein kann. Weiterhin betrifft die Erfindung einen Hinterbauständer für ein Zweirad.

Stützvorrichtungen für Zweiräder bzw. Fahrradständer, die im Bereich des Hinterrades mit dem Fahrradrahmen befestigt sind, sind allgemein bekannt.

So zeigt beispielsweise die DE 295 13 869 U1 einen einstellbaren, einbeinigen Fahrradständer. Der beschriebene Fahrradständer zeigt einen mittels einer relativen Verschiebung eines Innengewindes in der Länge einstellbaren Stützfuß, welcher über einen Montage- bzw. Stützkopf mit dem Fahrrad verbunden werden kann. Der Stützkopf weist eine Ausbuchtung auf und wird mit einer Befestigungsplatte verschraubt, so dass ein Rohrabschnitt des Fahrrades schellenartig umgriffen werden kann. Stützkopf und Befestigungsplatte können mit Schrauben zusammengezogen werden, wobei eine kraftschlüssige Verbindung zwischen Fahrradständer und dem Rohrabschnitt zustande kommt.

Problematisch bei einer derartigen, weitverbreiteten Befestigungsart ist eine mögliche Lockerung der Verbindung, beispielsweise durch den Betrieb des Fahrrades. Hierdurch besteht die Gefahr eines Verdrehens des Stützkopfes um den typischerweise zylinderförmigen Rohrabschnitt.

Um der Gefahr eines Verdrehens entgegenzuwirken, beschreibt EP 1 067 042 B1 eine Hinterachs-Stützvorrichtung, welche dadurch gekennzeichnet ist, dass an dem zur Befestigung vorgesehenen Rohrabschnitt des Fahrrades ein unlösbares Befestigungselement fixiert ist. Der Stützkopf des Fahrradständers ist sodann lösbar mit diesem Befestigungselement verbunden. Das Befestigungselement weist dabei die Form einer rechteckigen Platte auf und ist mittels einer Lötverbindung mit dem Rahmen verbunden.

Des weiteren schlägt die DE 203 17 605 U1 für eine stabile Abstützung eines Fahrrades vor, einen Montagekopf zusätzlich zu einem seitlichen Anschraubflansch mit einem unten anliegenden Stützflansch zu versehen. Auf diese Weise soll eine Stabilisierung des Verbindungsbereiches erreicht werden. Der Stützflansch liegt an der Unterkante des Ausfallendes an. Die Befestigung erfolgt über die Seite des Anschraubflansches. Der nächstliegende bekanntgewordene Stand der Technik ist der DE202006009295 zu entnehmen. Aufgabe der vorliegenden Erfindung ist es, ein Zweirad mit einer weitgehend verdrehsicheren, mechanisch steifen bzw. biegesteifen Stützvorrichtung sowie eine entsprechend verdrehsichere, mechanisch steife bzw. biegesteife Stützvorrichtung zur Verfügung zu stellen, wobei die Stützvorrichtung an dem Ausfallende des Zweirades befestigt werden kann. Die Lösung der Aufgabe ist in den kennzeichnenden Teilen der Hauptansprüche 1 und 9, und den untergeordneten Ansprüche beschrieben. Ausgestaltungen sind den jeweiligen Unteransprüchen zu entnehmen. Eine Verdrehsicherheit der Stützvorrichtung soll dabei für verschiedene Belastungssituationen des Zweirades gegeben sein, die bei einer Abstützung auftreten können. Dies kann einerseits eine Kraft aufgrund der Abstützung, andererseits aber auch eine Kraft sein, die aufgrund eines in Längsrichtung geneigten bzw. schräg abgestellten Zweirades auftreten kann. Während die erstgenannte Kraft ein Drehmoment um eine Achse, welche parallel zur Längsrichtung des Zweirades liegt, bewirken kann, so führt die zweite Kraft zu einem Drehmoment um eine Achse, welche parallel zu der Hinterrad-Achse verlaufen kann.

Weiterhin soll die Stützvorrichtung lösbar an dem Zweirad montierbar sein.

Des weiteren soll die Stützvorrichtung nur sehr wenige bzw. keine von außen sichtbaren oder überstehenden Befestigungselemente wie beispielsweise Schrauben oder Muttern aufweisen, um ein Verschmutzen bei Geländefahrten oder ein Festhalten von Gegenständen zu vermeiden.

Überraschend einfach wird diese Aufgabe durch ein Zweirad mit einem Hinterbauständer gemäß dem Anspruch 1 sowie einem Hinterbauständer mit den Merkmalen des Anspruchs 14 gelöst.

Bevorzugte Ausführungsformen und Weiterbildungen der Erfindung sind den jeweiligen Unteransprüchen zu entnehmen.

Die Erfindung betrifft ein Zweirad, insbesondere ein Fahrrad, beispielsweise ein Trecking-Rad, ein Rennrad oder ein Mountain-Bike, mit einer als Hinterbauständer ausgebildeten Stützvorrichtung, umfassend einen mit dem Zweirad verbundenen Montagekopf sowie eine verschwenkbar im Montagekopf gelagerte, stabförmige Stütze.

Die Stütze kann einen handelsüblichen, einbeinigen Stützfuss umfassen, welcher zwischen einer Fahrposition zum Fahren des Zweirades und einer Stützposition zum Stützen eines abgestellten Zweirades um eine Schwenkachse verschwenkt werden kann.

Des weiteren betrifft die Erfindung einen Montagekopf, der mit einem hinteren Abschnitt des Zweirades lösbar verbunden ist, wobei die Verbindung zwischen Hinterbauständer und hinterem Abschnitt des Zweirades zumindest zwei Kontaktflächen umfasst.

Diese Kontaktflächen zwischen Hinterbauständer und hinterem Bereich des Zweirades können einander gegenüber liegen, wobei zumindest eine der Kontaktflächen vorzugsweise in einer Ebene liegen kann, welche senkrecht zur Horizontalen verläuft.

Bevorzugt umfasst der hintere Bereich des Fahrrades ein Ausfallende. Der erfindungsgemäße Hinterbauständer kann mit dem Ausfallende des Zweirades lösbar verbunden werden, beispielsweise mittels einer Verschraubung.

Der Hinterbau eines Zweirades umfasst typischerweise eine oder mehrere Hinterachsschwingen bzw. Kettenstreben sowie eine oder mehrere Sitzstreben, welche an ihrem einen Ende mit einem Zweirad-Rahmen und mit dem gegenüberliegenden Ende mit jeweils einem Ausfallende verbunden sein können. Die Kettenstreben bzw. Hinterachsschwingen können an ihrem anderen Ende im Bereich der Tretlageraufnahme mit dem Zweirad-Rahmen verbunden sein; die Sitzstreben an ihrem anderen Ende im Bereich des Sattelrohrs.

Das Ausfallende kann der Verbindung von Ketten- und Sitzstrebe einerseits sowie der Aufnahme des Hinterrades andererseits dienen. Häufig weisen Zweiräder jeweils zwei Ketten- und Sitzstreben mit jeweils einem Ausfallende auf. Zwischen beiden Anordnungen befindet sich typischerweise ein Hinterrad, welches mittels einer Achse, die in den beidseitigen Ausfallenden gelagert ist, gehalten wird.

Der Hinterbauständer kann grundsätzlich mit dem hinteren Abschnitt eines Zweirades verbunden sein. Besonders bevorzugt kann er mit einem Ausfallende verbunden werden.

Häufig weisen Zweiräder eine Kettenschaltung auf. In diesem Fall kann es aus Platzgründen vorteilhaft sein, den Hinterbauständer mit dem der Kettenblattseite gegenüberliegenden Abschnitt bzw. Ausfallende zu verbinden. Typischerweise ist die Kettenblattseite eines Zweirades die in Fahrtrichtung rechts liegende Seite; die dem Kettenblatt gegenüberliegende Seite somit die linke Seite. Der Hinterbauständer kann vorteilhafterweise also auf der linken Seite des Zweirades mit einem hinteren Abschnitt desselben verbunden sein. Dabei kann er besonders bevorzugt mit dem linken Ausfallende lösbar verbunden sein.

Dabei kann der Montagekopf derart ausgebildet sein, dass er zumindest auf einer Seite des Ausfallendes zumindest teilweise flächig mit dem Ausfallende verbunden ist. Diese Seite des Ausfallendes ist bevorzugt die Außenseite des Ausfallendes. Unter der Außenseite des Ausfallendes ist nachfolgend diejenige Seite des Ausfallendes zu verstehen, die dem Hinterrad abgewandt ist und somit die von außen sichtbare Seite beschreibt.

Die zwischen dem Montagekopf und dem Ausfallende gebildete Kontaktfläche liegt bevorzugt in einer Ebene, welche senkrecht oder annähernd senkrecht zur Horizontalen verläuft.

Die Ausdehnung der Kontaktfläche zwischen dem Montagekopf und dem Ausfallende kann vorteilhaft in vertikaler Richtung zumindest gleich groß sein wie in horizontaler Richtung. Bei einer derartigen Ausbildung der Kontaktfläche kann die Gefahr eines Verdrehens des Montagekopfes aufgrund einer Abstützung des Zweirades um eine Achse, welche parallel zur Längsrichtung des Zweirades liegt, deutlich reduziert bzw. nahezu ausgeschlossen werden. Besonders günstig ist die Verdrehsicherheit, wenn die Ausdehnung der Kontaktfläche zwischen Montagekopf und Ausfallende in vertikaler Richtung größer als in horizontaler Richtung ausgebildet ist.

Als Längsrichtung des Zweirades wird nachfolgend die längste räumliche Ausdehnung des Zweirades verstanden, welche typischerweise parallel einer Geraden verläuft, welche durch den Mittelpunkt von Vorder- und Hinterrad festgelegt sein kann. Bei einer Abstützung des Zweirades kann eine Kraft auf den Montagekopf wirken, die aufgrund der Hebelwirkung ein Drehmoment bewirkt, welches um einen Drehpunkt bzw. eine Achse in Längsrichtung des Zweirades verläuft.

Wegen der in vertikaler Richtung großen Ausdehnung der ausgebildeten Kontaktfläche zwischen Montagekopf und Ausfallende kann diese Stützkraft deutlich besser auf das Zweirad übertragen werden. Aufgrund dieser deutlich verbesserten Abtragbarkeit der seitlich wirkenden Stützkräfte kann die Verdrehsicherheit des Hinterbauständers erheblich verbessert werden.

Der Montagekopf kann als Flansch oder flanschartig ausgebildet sein und eine zumindest teilweise plane Fläche aufweisen, welche mit der Außenseite des Ausfallendes verbunden werden kann. Geometrisch kann die Form des Flansches einen Teil der Form des Ausfallendes übernehmen bzw. imitieren, so dass der Montagekopf und das Ausfallende optisch eine Einheit bilden. Auf diese Weise kann der optische Gesamteindruck des Hinterbaus des Zweirades positiv beeinflusst werden.

Der Montagekopf kann mit zumindest einer Bohrung ausgebildet sein, um eine lösbare Befestigung mit dem Ausfallende zu ermöglichen.

Vorzugsweise kann die Bohrung ein Innengewinde aufweisen, um beispielsweise eine lösbare Verbindung zu dem Ausfallende mittels Schrauben zu ermöglichen.

Besonders bevorzugt ist die zumindest eine Bohrung auf der in Richtung des Hinterrades gelegenen Seite des Montagekopfs offen und auf der gegenüberliegenden Seite geschlossen ausgebildet. Der äußere optische Eindruck des Zweirades wird dadurch nicht durch vorstehende oder sichtbare Befestigungselemente des Montagekopfes beeinträchtigt.

Dies hat weiterhin den Vorteil, dass etwa bei einer Fahrt des Zweirads in Gelände eine geringere Gefahr des Anhaftens oder Anhängens oder Festhakens von Gegenständen, etwa dünnen Zweigen, in dem Bereich des Hinterbauständers besteht.

Besonders bevorzugt wird zwischen Montagekopf und Ausfallende eine zumindest zwei Seiten umfassende Kontaktfläche geschaffen, bei der der Montagekopf mit zwei sich gegenüberliegenden, nicht miteinander verbundenen Seiten des Ausfallendes eine Kontaktfläche ausbildet. Diese Flächen können in einer Ebene liegen, welche parallel zur Längsrichtung des Zweirades verlaufen kann. Dieses kann die dem Hinterrade zugewandte Seite des Ausfallendes sowie die gegenüberliegende, nach außen weisende Seite sein.

Der Montagekopf kann beispielsweise in seinem oberen Ende als u-förmiger Flansch ausgebildet sein und das Ausfallende von zwei gegenüberliegenden Seiten umfassen.

Auf diese Weise kann die Kontaktfläche zwischen Hinterbauständer und Ausfallende deutlich vergrößert werden, so dass die in einer Stützposition des Zweirades auf den Hinterbauständer wirkenden Kräfte besonders günstig über die gegenüberliegenden Kontaktflächen abgetragen werden können.

In einer weiterhin bevorzugten Weiterbildung kann der Hinterbauständer mehrteilig ausgebildet sein, umfassend den besagten Montagekopf sowie eine Befestigungsplatte. Montagekopf und Befestigungsplatte können dabei besonders günstig derart ausgebildet sein, dass sie u-förmig das Ausfallende umfassen und auf diese Weise zwei gegenüberliegende Kontaktflächen mit dem Ausfallende bilden.

Die Befestigungsplatte kann auf der dem Hinterrad zugewandten Seite des Ausfallendes, nachfolgend als Innenseite des Ausfallendes bezeichnet, angeordnet sein. Die Befestigungsplatte kann mit der Innenseite des Ausfallendes flächig verbunden sein und/oder auch mit dem Montagekopf.

In einer besonders bevorzugten Ausführungsform können daher die Befestigungsplatte und der Montagekopf lösbar miteinander verbunden sein und das Ausfallende von beiden Seiten umfassen. In anderen Worten, der Montagekopf und die Befestigungsplatte liegen an den gegenüberliegenden Seiten des Ausfallendes zumindest zum Teil flächig an bzw. umfassen das Ausfallende u-förmig.

Auf diese Weise kann eine verdrehsichere und mechanisch sehr steife bzw. biegesteife Verbindung zwischen Hinterbauständer und Zweirad geschaffen werden. Eine Verdrehung des Hinterbauständers um eine Achse in Längsrichtung des Fahrrades kann somit weitgehend ausgeschlossen werden.

Dabei kommt bevorzugt kein Kontakt zwischen Hinterbauständer und Ausfallende in dem unteren Bereich des Ausfallendes bzw. an dessen Unterkante zustande. Dies hat den Vorteil, dass der Montagekopf sowie die Befestigungsplatte mit größeren Fertigungstoleranzen in diesem Bereich gefertigt werden können und sich daher kostengünstiger herstellen lassen. Montagekopf und Befestigungsteil können beispielsweise als Schmiedeteil oder als Stanzteil gefertigt werden.

In einer weiterhin bevorzugten Ausführungsform kann der Montagekopf zumindest einen zapfenartigen Vorsprung aufweisen, welcher in eine Aussparung des Ausfallendes hineinragt.

Die geometrische Form des Vorsprungs kann beispielsweise kreisförmig, rechteckig oder länglich ausgebildet sein. Insbesondere bei kreisförmigen Vorsprüngen können mehrere Vorsprünge ausgebildet sein, um eine Verdrehsicherheit um eine Achse parallel zur Hinterradachse zu gewährleisten. Für eine höhere Verdrehsicherheit um diese Achse kann der Vorsprung auch länglich mit einer in vertikaler Richtung größeren Ausdehnung als in horizontaler Richtung ausgebildet sein.

Besonders vorteilhaft ist die Form der Aussparung in dem Ausfallende gegengleich zu dem Vorsprung des Montagekopfs ausgebildet. Auf diese Weise kann eine passgenaue, formschlüssige Verbindung zwischen Montagekopf und Ausfallende erzeugt werden.

Somit können Kräfte, die in einer Stützposition des Hinterbauständers ein Drehmoment auf den Montagekopf um eine Achse parallel zur Hinterrad-Achse des Zweirades bewirken, besonders günstig abgetragen werden, wodurch sich eine sehr hohe Verdrehsicherheit ergibt.

Durch eine derartige Verbindung des Hinterbauständers mit dem Ausfallende können mit anderen Worten daher sowohl Kräfte, die ein Drehmoment des Montagekopfes in Längsrichtung des Zweirades als auch in einer dazu senkrecht oder annähernd senkrecht stehenden Richtung parallel zur Hinterradachse bewirken, in vorteilhafter Weise abgetragen werden. Ein Verdrehen des Montagekopfes um jeweils Achsen in den besagten Richtungen kann daher deutlich reduziert oder nahezu ausgeschlossen werden. Die Befestigungsplatte kann vorteilhafterweise an der Innenseite des Ausfallendes zumindest teilweise flächig anliegen, um eine möglichst große Kontaktfläche zu schaffen.

Besonders bevorzugt können daher Montagekopf und/oder Befestigungsplatte sowie Ausfallende jeweils eine Kontaktfläche an zwei einander gegenüberliegenden, nicht aneinander stoßende Seiten bilden, wobei jeweils zumindest teilweise flächig ein Kontakt zustande kommt. Durch diese Anordnung kann eine besonders hohe Verdrehsicherheit und eine sehr hohe mechanische Stabilität der Verbindung gewährleistet sein.

Dabei kann die Befestigungsplatte zumindest eine durchgehende Bohrung aufweisen. Die Bohrung kann gegengleich zu der zumindest einen Bohrung der Montagekopf-Vorderseite angeordnet sein und kann der Verbindung beider Elemente miteinander mittels beispielsweise einer Schraubverbindung dienen. Die Bohrung der Befestigungsplatte kann ebenfalls mit einem Innengewinde ausgebildet sein.

Des weiteren kann die Befestigungsplatte einen oder mehrere zapfenartige Vorsprünge aufweisen, die ebenfalls in eine oder mehrere Aussparungen des Ausfallendes hineinragen können. Diese Vorsprünge können gegengleich zu dem oder den Vorsprüngen des Montagekopfes ausgebildet sein. Sie können ebenfalls in eine gegengleiche Aussparung des Ausfallendes hineinragen und auf diese Weise eine passgenaue, formschlüssige Verbindung zwischen Befestigungsplatte und Ausfallende bewirken.

Durch die große Kontaktfläche zwischen Ausfallende und Montagekopf bzw. Montagekopf und Befestigungsplatte mit einer großen vertikalen Ausdehnung kann eine hohe Verdrehsicherheit um eine in Längsrichtung des Zweirades verlaufende Achse, durch die Vorsprünge und die passgenauen Aussparungen des Ausfallendes eine günstige Verdrehsicherheit um eine parallel zur Hinterradachse verlaufende Achse erreicht werden. Auf diese Weise kann eine sehr hohe Verdrehsicherheit des Hinterbauständers um zumindest zwei Achsen erreicht werden.

Der Montagekopf und die Befestigungsplatte können lösbar miteinander verbunden sein, beispielsweise mit einer Schraubverbindung. Selbstverständlich können auch mehrere Schraubverbindungen oder anderweitige Verbindungsarten verwendet werden.

Dabei können die Befestigungselemente wie beispielsweise Schraubenköpfe oder Muttern bevorzugt derart angeordnet werden, dass sie zumindest von der Außenseite des Zweirades aus gesehen optisch nicht sichtbar sind.

Bevorzugt kann das Ausfallende eine oder mehrere Aussparungen aufweisen, welche zur Aufnahme des gegengleichen Vorsprungs von Montagekopf und/oder Befestigungsplatte vorgesehen sind. Auf diese Weise können Montagekopf und Befestigungsplatte passgenau und formschlüssig mit dem Ausfallende verbunden werden.

Ebenso kann das Ausfallende aber auch mit Ausnehmungen ausgebildet sein, welche eine gegengleiche Form zu dem bzw. den Vorsprüngen von Montagekopf und/oder Befestigungsplatte aufweisen und vorteilhaft zur Aufnahme des jeweiligen vorspringenden Teils bzw. Vorsprungs ausgebildet sind. Zur Verbindung von Montagekopf und Befestigungsplatte können durchgehende Bohrungen in dem Ausfallende ausgebildet sein, durch die beispielsweise Schrauben hindurch gesteckt werden können, um etwa eine Verschraubung von Befestigungsplatte und Montagekopf zu erreichen.

In einer weiteren bevorzugten Ausführungsform sind die Außenseiten des Ausfallendes, welche die Kontaktfläche zu dem Montagekopf und/oder der Befestigungsplatte darstellen, zumindest zum Teil plan ausgebildet, um eine größere jeweilige gemeinsame Kontaktfläche zu bilden. Durch das Schaffen einer Verbindung von Montagekopf und Befestigungsplatte kann auch eine kraftschlüssige Verbindung ausgebildet werden.

Hierdurch kann besonders günstig eine Übertragung der auf die Stütze wirkenden Kräfte auf das Zweirad bzw. das Ausfallende des Zweirades ermöglicht werden.

Auf die Stütze auftretende Biegekräfte können besonders günstig aufgrund der großen Kontaktfläche, Stützkräfte aufgrund der Hebelwirkung ebenfalls aufgrund der großen Kontaktfläche sowie aufgrund der Vorsprünge und der passgenauen Ausnehmungen vorzüglich übertragen werden.

In einer Weiterbildung der Erfindung kann das Ausfallende in dem der Kettenstrebe zugewandten Teil mit einer von der Unterseite aus offene Ausnehmung ausgebildet sein zur Aufnahme eines zapfenartigen Vorsprungs des Montagekopfes. Diese Ausnehmung kann sich nach oben hin verjüngen. Weiterhin kann die Ausnehmung mit einer Bohrung versehen sein, um eine lösbare Verbindung mit dem Montagekopf zu erzeugen. Die Verbindung kann beispielsweise mittels Schrauben erfolgen.

Besonders bevorzugt kann der Montagekopf bei dieser Ausführungsform mit einem gegengleichen, zapfenartigen Vorsprung in seinem oberen Bereich ausgebildet sein. Auf diese Weise kann der Montagekopf von unten in die Ausnehmung ein- oder hineingeschoben werden. Der Vorsprung kann dabei beispielsweise eine rechteckige Außenkontur aufweisen, welche sich passgenau und gegengleich zu der Ausnehmung des Ausfallendes nach oben hin verjüngen kann. Am oberen Ende kann der Vorsprung des Montagekopfes mit zumindest einer Gewindebohrung versehen sein.

Bei dieser Ausführungsform kann der Montagekopf besonders günstig einteilig ausgebildet sein und von unten in die Öffnung des Ausfallendes hineingeschoben werden. Eine formschlüssige Kontaktfläche kann dann zwischen den Seiten bzw. Seitenflächen des Vorsprungs des Montagekopfes sowie den Innenflächen der Ausnehmung ausgebildet werden. Auf diese Weise können mehrere Kontaktflächen zwischen Montagekopf und Ausfallende ausgebildet sein. Die Kontaktflächen liegen bevorzugt in einer Ebene, welche senkrecht oder leicht geneigt zur Horizontalen liegt.

Besonders bevorzugt können Kontaktflächen zwischen Ausfallende und Montagekopf auf zwei gegenüberliegenden Innenseiten der Aussparung ausgebildet werden, wobei die eine Seite in Richtung des Hinterrades liegen kann.

Bei dieser Ausführungsform kann der zapfenartige Vorsprung des Montagekopfes zumindest an einer Seite, bevorzugt an mehreren Seiten eine Kontaktfläche zum Ausfallende ausbilden. Besonders bevorzugt kann jeweils eine Kontaktfläche zwischen Ausfallende und Montagekopf an zwei gegenüberliegenden, nicht aneinander stoßende Seiten gebildet werden, wobei jeweils zumindest teilweise flächig eine Verbindung zustande kommt.

Durch diese Anordnung kann eine besonders hohe Verdrehsicherheit und eine sehr günstige mechanische Stabilität der Verbindung erreicht werden.

Durch die Erfindung kann ein Zweirad mit einem Hinterbauständer zur Verfügung gestellt werden, wobei der Hinterbauständer lösbar und zumindest teilweise flächig mit dem Ausfallende verbunden sein kann.

Auf diese Weise kann ein Zweirad zur Verfügung gestellt werden, welches mit einem besonders verdrehsicheren, mechanisch stabilen und biegesteif verbundenen Hinterbauständer ausgestattet werden kann.

Zudem kann eine Hinterbauständer zur Verfügung gestellt werden, welcher verdrehsicher und mechanisch stabil mit dem Hinterbau eines Zweirades verbunden werden kann.

Der erfindungsgemäße Hinterbauständer, umfassend einen Montagekopf als Verbindungselement zwischen einem Stützelement und einem zu stützenden Gegenstand, kann selbstverständlich auch zum Stützen von anderen Gegenständen verwendet werden. Beispielhaft seien hier etwa Gepäckwagen oder -träger, Kinderwagen oder auch Deichseln von Anhängern genannt.

Weitere Einzelheiten der Erfindung ergeben sich aus der Beschreibung der dargestellten Ausführungsbeispiele und den angefügten Ansprüchen.

### Die Zeichnungen zeigen:

- Figur 1: eine Komplettansicht einer Ausführungsform eines Hinterbauständers,
- Figur 2: eine Draufsicht auf einen Montagekopf und ein Ausfallende,
- Figur 3: eine Seitenansicht eines Montagekopfes und einer Befestigungsplatte sowie einen Ausschnitt eines Ausfallendes im Querschnitt,
- Figur 4: eine Sicht auf einen Montagekopf sowie eine Befestigungsplatte im Querschnitt,
- Figur 5: eine Draufsicht auf eine Befestigungsplatte,
- Figur 6: eine weitere Sicht auf einen Montagekopf und eine Befestigungsplatte,
- Figur 7: eine Draufsicht auf eine weitere Ausführungsform, umfassend ein Ausfallende sowie einen Montagekopf und
- Figur 8: eine Sicht auf eine weitere Ausführungsform von Ausfallende und Montagekopf im Querschnitt.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen.

Zweiräder können mit als Hinterbauständer ausgebildeten Stützvorrichtungen versehen werden. Häufig werden derartige Stützvorrichtungen an einer Seite des Fahrrades im Bereich des Hinterbaus mit diesem verbunden. Der Hinterbau von Zweirädern kann dabei typischerweise eine Hinterachsschwinge bzw. eine Kettenstrebe aufweisen. An dessen hinteren, der Sattelstütze abgewandten Seite der Kettenstrebe kann dabei ein Ausfallende angeordnet sein, welches weiterhin mit einer Sattelstrebe verbunden und zur Aufnahme des Hinterrades vorgesehen sein kann.

Erfindungsgemäße Zweiräder umfassen einen Hinterbauständer, welcher im Bereich des Ausfallendes mit diesem verbunden ist. Bei Zweirädern, welche über eine Kettenschaltung mit Kettenblättern im Bereich des Hinterrades verfügen, ist der Hinterbauständer bevorzugt auf der den Kettenblättern gegenüberliegenden Seite befestigt, also mit dem Ausfallende, welches nicht neben den Kettenblättern angeordnet ist.

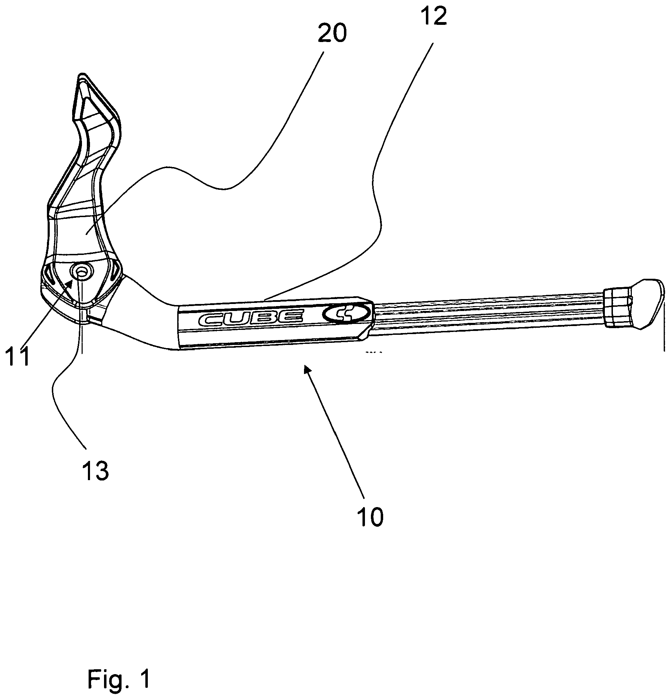

Figur 1 zeigt eine bevorzugte Ausführungsform eines Hinterbauständers 10. Der Hinterbauständer 10 umfasst dabei einen Montagekopf 20 sowie eine einbeinige, stabförmige Stütze 12. Die Stütze 12 ist dabei um eine Schwenkachse 11, welche im Bereich einer durchgehenden Bohrung 13 liegt, verschwenkbar in dem Montagekopf gelagert.

Es sind grundsätzlich Stützen 12 oder Stützstäbe in verschiedenen Ausführungsformen für ein erfindungsgemäßes Zweirad mit Hinterbauständer verwendbar, umfassend ein- oder zweibeinige Ausführungsformen, welche mittels eines Montagekopfes 20 im Sinne der vorliegenden Erfindung mit dem Zweirad verbunden werden können. Ebenso kann das Zweirad auch an beiden Ausfallenden mit einem erfindungsgemäßen Hinterbauständer ausgestattet werden. Zweirad und Ausfallende sind nicht dargestellt.

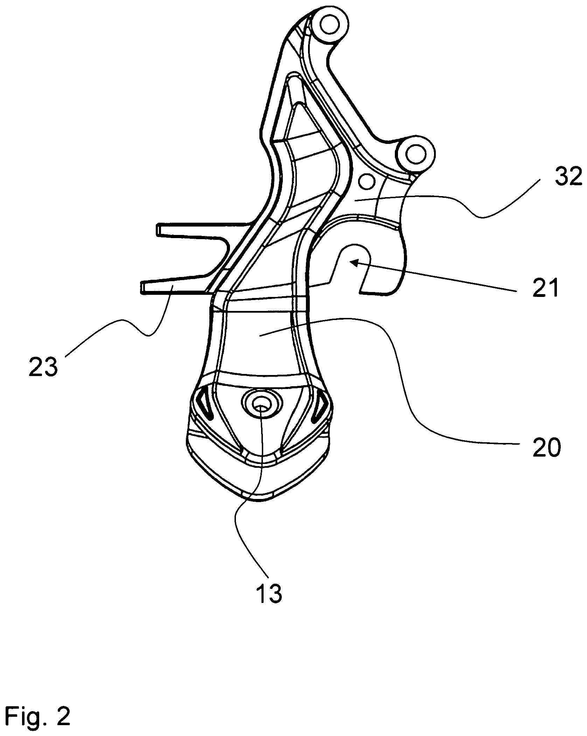

Figur 2 zeigt eine Detailseitenansicht eines Montagekopfes 20 mit einer Bohrung 13 zur Aufnahme eines Stützstabes bzw. einer Stütze. Die abgebildete Seite stellt diejenige Seite dar, die ein Betrachter in einem montierten Zustand sieht, wenn er seitlich auf das Zweirad blickt. Befestigungselemente der Verbindung zwischen Montagekopf 20 und Ausfallende 32 wie beispielsweise Schrauben oder Muttern sind optisch von außen nicht sichtbar. Geometrisch weist der Montagekopf 20 eine Form auf, welche der Form des Ausfallendes 32 nachempfunden ist. Optisch kann so eine homogene, einheitliche Außenansicht des Zweirades im Bereich des Hinterbaus geschaffen werden. 23 zeigt Befestigungselemente zur Verbindung des Ausfallendes 32 mit einer Kettenstrebe (nicht dargestellt). Ein Hinterrad (nicht dargestellt) kann im Bereich der Aussparung 21 mit dem Ausfallende verbunden werden.

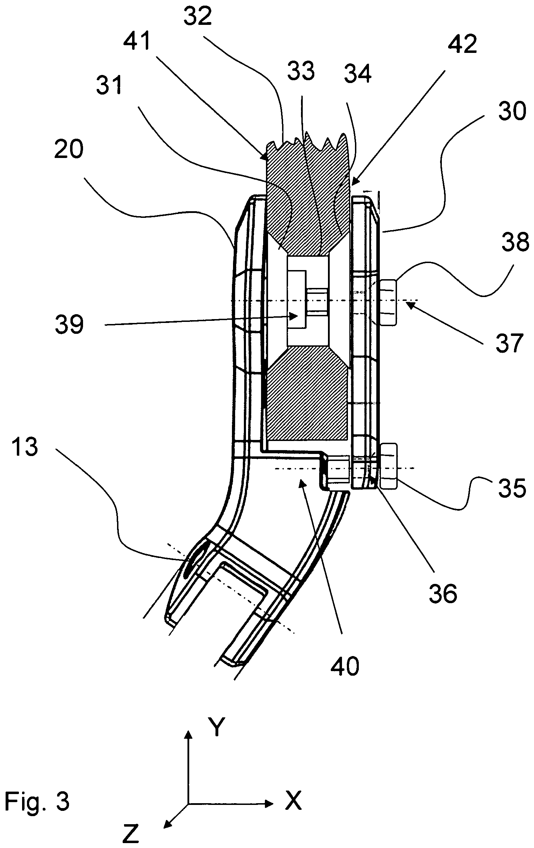

In Figur 3 sind ein Montagekopf 20 sowie ein Ausschnitt des Ausfallendes 32 im Querschnitt gezeigt. Der Montagekopf 20 liegt teilweise flächig an der dem Hinterrad (nicht dargestellt) abgewandten Seite bzw. der Außenseite 41 des Ausfallendes 32 an.

Zur Ausbildung einer formschlüssigen Verbindung weist der Montagekopf einen länglichen Vorsprung 31 auf, der passgenau in eine Aussparung des Ausfallendes 32 hineinragt. Der Vorsprung ist bevorzugt in vertikaler Ausdehnung größer als in horizontaler Ausdehnung, um so auch Drehmomente, welche um eine Achse wirken, die parallel zu einer Bohrung 37 verläuft, von dem Stützstab günstig auf das Zweirad übertragen zu können.

Des weiteren ist eine Befestigungsplatte 30 gezeigt, welche ebenfalls einen Vorsprung 34 aufweist. Im Bereich des Vorsprungs ist zugleich eine durchgehende Bohrung 37 ausgebildet. Der Vorsprung 34 kann gegengleich zu dem Vorsprung des Montagekopfes 31 ausgebildet sein. Vorteilhaft weist auch die dem Hinterrad zugewandte Seite bzw. Innenseite 42 des Ausfallendes 32 eine Aussparung auf, die passgenau zur Aufnahme des Vorsprungs 34 der Befestigungsplatte 30 ausgebildet ist.

Das Ausfallende 32 weist in einer besonders bevorzugten Ausführungsform eine durchgehende Öffnung 33 auf, welche im Bereich der Aussparung liegt. Durch diese Öffnung 33 kann die Befestigungsplatte 30 mit dem Montagekopf 20 miteinander verschraubt werden. Auf diese Weise wird eine zweiseite Kontaktfläche zwischen Montagekopf 20 und Befestigungsplatte 30 sowie dem Ausfallende 32 geschaffen, wobei die jeweiligen Kontaktflächen einander gegenüber liegen und nicht aneinander stoßen. Auf diese Weise kann eine sehr hohe Verdrehsicherheit um zumindest zwei verschiedene Achsen bewirkt werden.

So bewirken die Vorsprünge des Montagekopfes und/oder der Befestigungsplatte und das Ineinandergreifen dieser Vorsprünge in die gegengleichen Aussparungen des Ausfallendes eine besonders hohe Verdrehsicherheit um eine Achse, welche parallel zu einer in Richtung X laufenden Achse liegt, während die große Kontaktfläche mit einer in vertikaler Richtung zumindest gleich großen Ausdehnung wie in horizontaler Richtung eine besonders hohe Verdrehsicherheit um eine Achse, welche parallel zu einer in Richtung Z laufenden Achse liegt.

Zwischen Unterkante des Ausfallendes und Montagekopf und/oder Befestigungsplatte kann die Ausbildung einer Kontaktfläche vermieden werden, um mögliche Fertigungstoleranzen der Bauteile ausgleichen zu können, ohne dass hierdurch die Verdrehsicherheit oder die Steifigkeit der Verbindung vermindert wird.

Auf diese Weise können der Montagekopf und/oder die Befestigungsplatte als Schmiede- bzw. Stanzteil vergleichsweise kostengünstig mit nur geringem Nachbearbeitungsaufwand hergestellt werden.

Gut geeignet zur Herstellung einer lösbaren Verbindung zwischen Montagekopf 20 und Befestigungsplatte 32 sind beispielsweise Schrauben 38. Hierzu ist der Montagekopf 20 mit einer nicht durchgehenden Bohrung 39 mit einem Innengewinde zur Aufnahme einer oder mehrer Schrauben versehen. Die Bohrung ist in Richtung des Hinterrades offen um eine Verschraubung mit der Befestigungsplatte 32 zu ermöglichen. Von der dem Hinterrad abgewandten Seite, mit anderen Worten von außen, sind die Befestigungselemente daher nicht zu sehen, da die Verschraubung besonders bevorzugt von innen, also der dem Hinterrad zugewandten Seite erfolgt.

Zur Verbindung der Befestigungsplatte 32 mit dem Montagekopf 20 können weitere Schrauben vorgesehen sein. So zeigt 35 eine Schraube, die durch eine durchgehende Bohrung 36 die Befestigungsplatte 32 direkt mit dem Montagekopf 20 über eine nicht durchgehende Bohrung 40, welche mit einem Innengewinde versehen ist, verbindet. Auf diese Weise kann eine besonders stabile, biege- und torsionssteife Verbindung zwischen Zweirad und Hinterbauständer geschaffen werden.

In einer Weiterbildung der Erfindung wird der Montagekopf 20 direkt mit dem Ausfallende 32 verschraubt, ohne dass eine Befestigungsplatte verwendet wird. Hierfür ist das Ausfallende 32 entsprechend ausgebildet, um beispielsweise mittels einer oder mehrere Schrauben 35, 38 mit dem Montagekopf 20 verbunden zu werden.

In einer nochmals weiteren Weiterbildung weist der Montagekopf und/oder die Befestigungsplatte mehr als einen Vorsprung zum Schaffen einer formschlüssigen Verbindung auf. Dies können beispielsweise zwei oder mehr, über- und/oder nebeneinander angeordnete Vorsprünge sein. Diese Vorsprünge können auch kreisförmig ausgebildet sein.

Idealerweise ist das Ausfallende derart ausgebildet, dass die zapfenartigen Vorsprünge von Montagekopf und/oder Befestigungsplatte passgenau und formschlüssig ineinander passen.

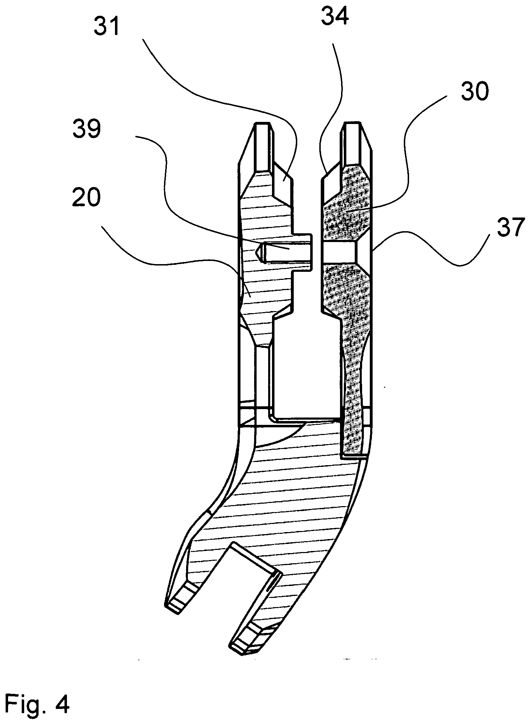

Figur 4 zeigt einen Montagekopf 20 sowie eine Befestigungsplatte 30 im Querschnitt, wobei 39 eine nicht durchgehende Bohrung im Montagekopf 20 zeigt, welche bevorzugt ein Innengewinde aufweisen kann. Die Bohrung 39 ist in Richtung des Hinterrades offen. Die jeweiligen Vorsprünge 31 und 34 von Montagekopf 20 und Befestigungsplatte 30 sind gegengleich ausgebildet. Sie können aber auch in unterschiedliche, voneinander abweichenden Formen ausgebildet sein. Eine gegengleiche Ausbildung kann sich aus Kostengründen anbieten. Die durchgehende Bohrung 37 kann besonders vorteilhaft zur Aufnahme einer Schraube verwendet werden. Über eine Schraubverbindung (nicht dargestellt) können Befestigungsplatte 30 und Montagekopf 20 im Bereich der jeweiligen Bohrungen 37, 39 miteinander verbunden werden.

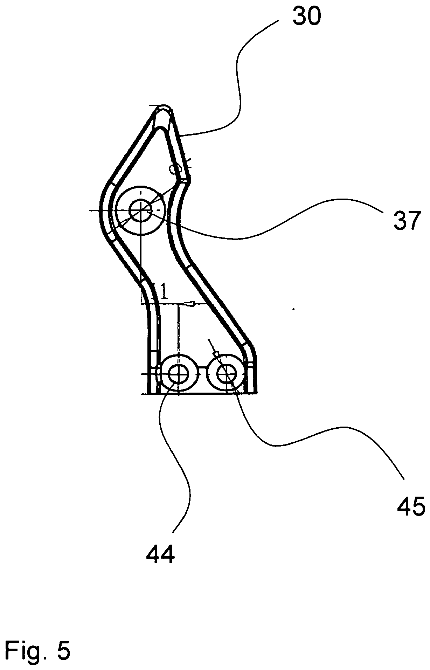

In Figur 5 ist eine Draufsicht auf eine Befestigungsplatte 30 dargestellt. Gezeigt ist die Ansicht aus der Richtung des Hinterrades. Die geometrische Form der Befestigungsplatte 30 ist der Form des Ausfallendes (nicht dargestellt) nachempfunden. Die Befestigungsplatte 30 weist insgesamt 3 Bohrungen 37, 44, 45 auf, die zum Verbinden der Befestigungsplatte 30 mit dem Montagekopf 20 dienen.

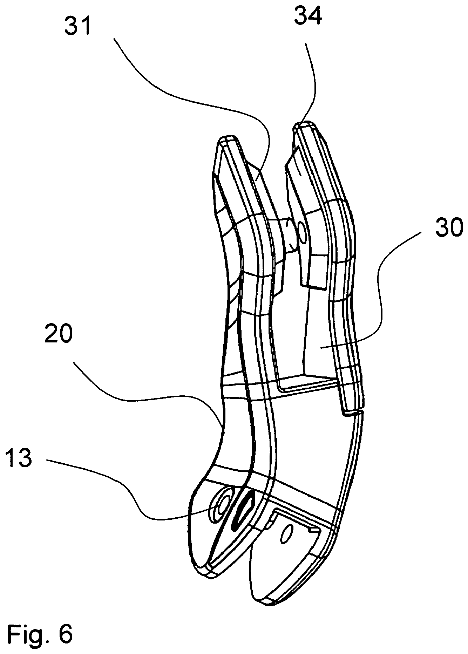

Figur 6 zeigt eine weitere Seitenansicht eines Montagekopfes 20 und einer Befestigungsplatte 30. Die jeweiligen Vorsprünge 31 und 34 weisen eine längliche geometrische Form auf und sind gegengleich zueinander ausgebildet. In ihrer jeweiligen vertikalen Ausdehnung sind die Vorsprünge größer als in ihrer horizontalen Ausdehnung ausgebildet.

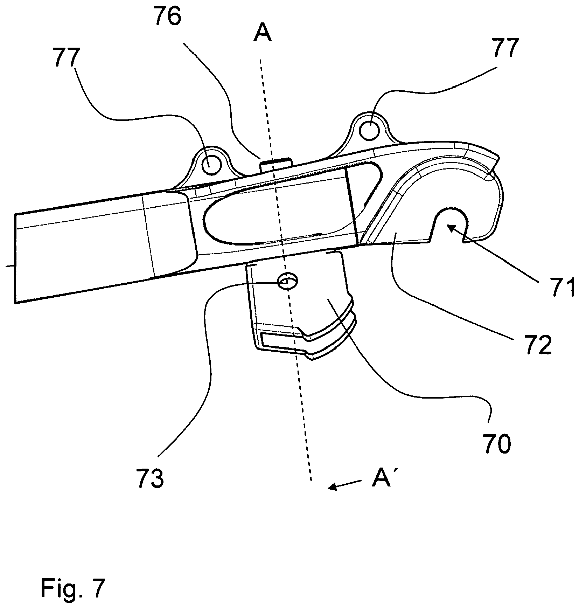

In Figur 7 ist eine weitere Ausführungsform dargestellt. Das gezeigte Ausfallende 72 weist hierbei eine Ausnehmung 71 zur Aufnahme eines Hinterrades (nicht dargestellt) auf. Die Befestigungselemente 77 können zur Verbindung des Ausfallendes mit einer Sattelstrebe dienen. Eine von unten offene Ausnehmung 75 dient der Aufnahme eines Montagekopfes 70. Der Montagekopf 70 weist an seinem oberen Ende einen zapfenartigen Vorsprung auf, welcher in das Ausfallende von unten hineinragt. Dadurch kann eine formschlüssige Verbindung zwischen Montagekopf 70 und Ausfallende 72 geschaffen werden. Der Montagekopf kann mittels einer Verschraubung 76 lösbar mit dem Ausfallende 72 verbunden werden. An seinem anderen Ende weist der Montagekopf eine Bohrung 73 zur Aufnahme und Befestigung einer Stütze (nicht dargestellt) auf.

Bei dieser Ausführungsform wird eine formschlüssige Verbindung nicht nur über zwei gegenüberliegende Kontaktflächen geschaffen, sondern es kann eine annähernd voll-formschlüssige Verbindung geschaffen werden. Diese annähernd voll-formschlüssige Verbindung von Montagekopf und Ausfallende kann idealerweise sämtliche, umseitig den Vorsprung des Montagekopfes umgebenden Flächen umfassen.

Auf diese Weise kann eine besonders platzsparende Verbindung von Montagekopf und Zweirad geschaffen werden, welche dennoch über eine sehr hohe mechanische Stabilität und Biegesteifigkeit verfügt.

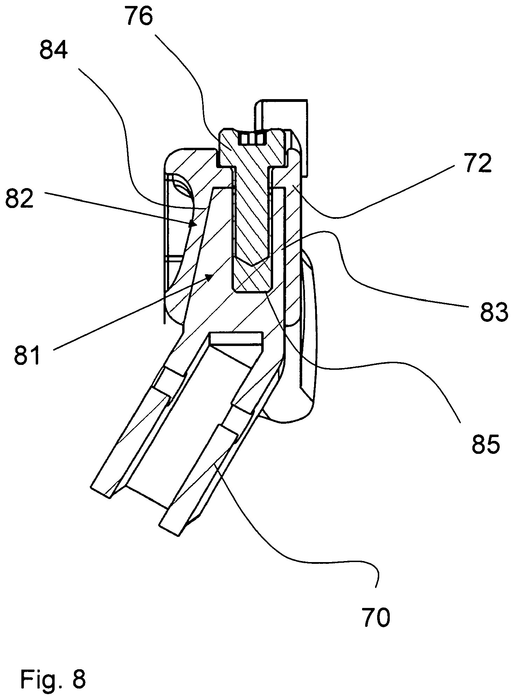

Die eine weitere Ausführungsform ist in Figur 8 im Querschnitt gezeigt, wobei die Schnittkante der Linie A in Blickrichtung A' der Figur 7 entspricht. Das Ausfallende 72 weist eine sich nach oben verjüngende Ausnehmung auf, in die der Vorsprung 81 des Montagekopfes 70 eingeschoben ist. Der Vorsprung 81 des Montagekopfes 70 ist gegengleich zu der Ausnehmung 82 in dem Ausfallende 72 ausgebildet, so dass passgenau eine formschlüssige Verbindung zwischen Montagekopf 70 und Ausfallende 72 geschaffen werden kann. Mittels einer Schraube 76 sind beide Komponenten miteinander lösbar verbunden. 83 und 84 bilden die zumindest zwei gegenüberliegenden Kontaktflächen zwischen Montagekopf 70 und Ausfallende 72.

In einer nochmaligen Weiterbildung der Erfindung wird der Montagekopf 70 mit einer Ausnehmung in einem hinteren Abschnitt eines Zweirades verbunden. Dieser Abschnitt kann beispielsweise die Hinterachsschwinge oder die hintere Kettenstrebe umfassen.

Vorteilhaft ist diese Ausnehmung formähnlich der in Figur 8 gezeigten Ausnehmung in dem Ausfallende ausgebildet.

## Patentansprüche

1. Zweirad, insbesondere Fahrrad, mit einem Hinterbauständer (10), umfassend einen mit dem Zweirad verbundenen Montagekopf (20, 70) sowie eine verschwenkbar um eine Schwenkachse (11) im Montagekopf gelagerte, stabförmige Stütze (12), bei welchem
der Montagekopf (20, 70) mit einem hinteren Abschnitt des Zweirades lösbar verbunden ist,
die Verbindung zwischen Hinterbauständer und hinterem Abschnitt des Zweirades zumindest zwei Kontaktflächen umfasst,
zumindest zwei der Kontaktflächen zwischen Hinterbauständer und hinterem Bereich des Zweirades einander gegenüber liegen und
zumindest eine der Kontaktflächen vorzugsweise in einer Ebene liegt, welche senkrecht zur Horizontalen verläuft, **dadurch gekennzeichnet, dass**
der hintere Abschnitt des Zweirades ein Ausfallende (32, 72) umfasst, **dadurch gekennzeichnet dass** der Montagekopf (20, 70) zumindest einen zapfenartigen Vorsprung (31, 81) aufweist, welcher in eine gegengleiche Aussparung des Ausfallendes (32, 72) hineinragt, wobei der Hinterbauständer (10) mehrteilig ausgeführt ist und neben dem Montagekopf (20) eine Befestigungsplatte (30) umfasst, und wobei der Montagekopf (20) und die Befestigungsplatte (30) den u-förmigen Flansch ausbilden.

2. Zweirad mit einem Hinterbauständer nach Anspruch 1, **dadurch gekennzeichnet, dass** eine plane Kontaktfläche zwischen dem Montagekopf (20, 70) und der dem Hinterrad abgewandten Seite des Ausfallendes (32, 72) ausgebildet ist.

3. Zweirad mit einem Hinterbauständer nach vorstehenden Ansprüchen, **dadurch gekennzeichnet, dass** die Kontaktfläche in vertikaler Ausdehnung gleich groß oder größer als in horizontaler Ausdehnung ist.

4. Zweirad mit einem Hinterbauständer nach vorstehenden Ansprüchen, **dadurch gekennzeichnet, dass** der Montagekopf (20) an einem Ende als Flansch ausgebildet ist.

5. Zweirad mit einem Hinterbauständer nach vorstehenden Ansprüchen, **dadurch gekennzeichnet, dass** der Montagekopf (20) und die Befestigungsplatte (30) jeweils zumindest eine Kontaktfläche zum Ausfallende (32) ausbilden.

6. Zweirad mit einem Hinterbauständer nach vorstehenden Ansprüchen, **dadurch gekennzeichnet, dass** die Befestigungsplatte (30) zumindest einen zapfenartigen Vorsprung (34) aufweist, welcher in eine gegengleiche Aussparung des Ausfallendes (32) hineinragt.

7. Zweirad mit einem Hinterbauständer nach vorstehenden Ansprüchen, **dadurch gekennzeichnet, dass** der Montagekopf (20) und die Befestigungsplatte (30) lösbar miteinander verbunden sind.

8. Zweirad mit einem Hinterbauständer nach vorstehenden Ansprüchen, **dadurch gekennzeichnet, dass** das Ausfallende (32, 72) mit gegengleichen Aussparungen oder Ausnehmungen zur Aufnahme des oder der zapfenartigen Vorsprünge des Montagekopfes (20, 70) und/oder der Befestigungsplatte (30) ausgebildet ist.

9. Hinterbauständer-Stützvorrichtung für ein Zweirad, insbesondere für ein Fahrrad nach einem der vorstehenden Ansprüche, umfassend einen mit dem Zweirad verbindbar Montagekopf (20, 70) sowie eine verschwenkbar im Montagekopf (20, 70) gelagerte, stabförmige Stütze (12), bei welchem
der Montagekopf (20, 70) mit einem hinteren Abschnitt des Zweirades lösbar verbunden ist,
die Verbindung zwischen Hinterbauständer und hinterem Abschnitt des Zweirades zumindest zwei Kontaktflächen umfasst,
zumindest zwei der Kontaktflächen zwischen Hinterbauständer und hinterem Bereich des Zweirades einander gegenüber liegen und
zumindest eine der Kontaktflächen vorzugsweise in einer Ebene liegt, welche senkrecht zur Horizontalen verläuft, 5 und **dadurch gekennzeichnet, dass** der Montagekopf (20, 70) zumindest einen zapfenartigen Vorsprung (31, 81) aufweist, welcher in eine gegengleiche Aussparung des Ausfallendes (32, 72) hineinragt, wobei der Hinterbauständer (10) mehrteilig ausgeführt ist und neben dem Montagekopf (20) eine Befestigungsplatte (30) umfasst, und wobei der Montagekopf (20) und die Befestigungsplatte (30) den u-förmigen Flansch ausbilden.

10. Hinterbauständer-Stützvorrichtung für ein Zweirad nach Anspruch 9, **dadurch gekennzeichnet, dass** sie gemäß einem der Ansprüche 2 bis 8 ausgebildet ist.

## Claims

1. A two-wheeler, in particular a bicycle, with a rear end stand (10), comprising a mounting head (20, 70) connected to the two-wheeler, and a rod-shaped support (12) mounted in the mounting head so as to be pivotable about a pivot axis (11), wherein
the mounting head (20, 70) is releasably connected to a rear portion of the two-wheeler;
the connection between the rear end stand and the rear portion of the two-wheeler comprises at least two contact surfaces;
at least two of the contact surfaces between the rear end stand and the rear portion of the two-wheeler are opposed to each other; and
at least one of the contact surfaces preferably lies in a plane which is perpendicular to the horizontal; **characterized in that** the rear portion of the two-wheeler comprises a dropout end (32, 72);
**characterized in that**
the mounting head (20, 70) has at least one conical projection (31, 81) which projects into a complementary recess of the dropout end (32, 72), wherein the rear end stand (10) is of multi-part design and comprises, in addition to the mounting head (20), a mounting plate (30), and wherein the mounting head (20) and the mounting plate (30) form a U-shaped flange.

2. The two-wheeler with a rear end stand according to claim 1, **characterized in that** a planar contact surface is defined between the mounting head (20, 70) and the side of the dropout end (32, 72) facing away from the rear wheel.

3. The two-wheeler with a rear end stand according to the preceding claims, **characterized in that** the contact surface has a vertical dimension that is of the same size or larger than the horizontal dimension thereof.

4. The two-wheeler with a rear end stand according to the preceding claims, **characterized in that** the mounting head (20) is in the form of a flange at one end thereof.

5. The two-wheeler with a rear end stand according to the preceding claims, **characterized in that** the mounting head (20) and the mounting plate (30) each provide at least one contact surface to the dropout end (32).

6. The two-wheeler with a rear end stand according to the preceding claims, **characterized in that** the fastening plate (30) has at least one conical projection (34) which projects into a complementary recess of the dropout end (32).

7. The two-wheeler with a rear end stand according to the preceding claims, **characterized in that** the mounting head (20) and the mounting plate (30) are detachably connected to each other.

8. The two-wheeler with a rear end stand according to the preceding claims, **characterized in that** the dropout end (32, 72) is formed with complementary recesses or pockets for accommodating the one or more conical projections of the mounting head (20, 70) and/or the mounting plate (30).

9. A rear end stand device for a two-wheeler, in particular for a bicycle according to any one of the preceding claims, comprising a mounting head (20, 70) that is connectable to the two-wheeler, and a rod-shaped support (12) mounted in the mounting head (20, 70) so as to be pivotable;
wherein the mounting head (20, 70) is detachably connected to a rear portion of the two-wheeler;
the connection between the rear end stand and the rear portion of the two-wheeler comprises at least two contact surfaces;
at least two of the contact surfaces between the rear end stand and the rear portion of the two-wheeler are opposed to each other, and
at least one of the contact surfaces preferably lies in a plane which is perpendicular to the horizontal; and **characterized in that**
the mounting head (20, 70) has at least one conical projection (31, 81) which projects into an complementary recess of the dropout end (32, 72), wherein the rear end stand (10) is of multi-part design and comprises, in addition to the mounting head (20), a mounting plate (30), and wherein the mounting head (20) and the mounting plate (30) form a U-shaped flange.

10. The rear end stand device for a two-wheeler according to claim 9, **characterized in that** it is designed according to any one of claims 2 to 8.

## Revendications

1. Deux-roues, en particulier bicyclette, comprenant un support de structure arrière (10), comportant une tête de montage (20, 70) reliée au deux-roues ainsi qu'un appui (12) en forme de barre, monté dans la tête de montage de manière à pouvoir pivoter autour d'un axe de pivotement (11), dans lequel :
la tête de montage (20, 70) est reliée de manière détachable à une partie arrière du deux-roues,
la liaison entre le support de structure arrière et la partie arrière du deux roues comprend au moins deux surfaces de contact,
au moins deux des surfaces de contact entre le support de structure arrière et la zone arrière du deux roues sont situées en vis-à-vis et
au moins l'une des surfaces de contact se situe de préférence dans un plan, lequel s'étend perpendiculairement à l'horizontale, **caractérisé en ce que**
la partie arrière du deux-roues comporte une patte d'extrémité (32, 72),
**caractérisé en ce que** :
la tête de montage (20, 70) comprend au moins une partie saillante (31, 81) du type tourillon, laquelle fait saillie à l'intérieur d'un évidement diamétralement opposé de la patte d'extrémité (32, 72), le support de structure arrière (10) étant réalisé en plusieurs parties et comportant, en plus de la tête de montage (20), une plaque de fixation (30), et la tête de montage (20) et la plaque de fixation (30) constituant la bride en forme de u.

2. Deux-roues comprenant un support de structure arrière selon la revendication 1, **caractérisé en ce qu'**une surface de contact plane est formée entre la tête de montage (20, 70) et la face de la patte d'extrémité (32, 72) opposée à la roue arrière.

3. Deux-roues comprenant un support de structure arrière selon l'une quelconque des revendications précédentes, **caractérisé en ce que** la surface de contact, dans sa dimension verticale, est aussi grande ou plus grande que dans sa dimension horizontale.

4. Deux-roues comprenant un support de structure arrière selon l'une quelconque des revendications précédentes, **caractérisé en ce que** la tête de montage (20) est réalisée à une extrémité sous la forme d'une bride.

5. Deux-roues comprenant un support de structure arrière selon l'une quelconque des revendications précédentes, **caractérisé en ce que** la tête de montage (20) et la plaque de fixation (30) forment chacune au moins une surface de contact avec la patte d'extrémité (32).

6. Deux-roues comprenant un support de structure arrière selon l'une quelconque des revendications précédentes, **caractérisé en ce que** la plaque de fixation (30) comprend au moins une partie saillante (34) du type tourillon, laquelle fait saillie à l'intérieur d'un évidement diamétralement opposé de la patte d'extrémité (32).

7. Deux-roues comprenant un support de structure arrière selon l'une quelconque des revendications précédentes, **caractérisé en ce que** la tête de montage (20) et la plaque de fixation (30) sont reliées l'une à l'autre de manière détachable.

8. Deux-roues comprenant un support de structure arrière selon l'une quelconque des revendications précédentes, **caractérisé en ce que** la patte d'extrémité (32, 72) est pourvue de creux ou d'évidements diamétralement opposés destinés à recevoir la ou les parties saillantes du type tourillon de la tête de montage (20, 70) et/ou de la plaque de fixation (30).

9. Dispositif d'appui de support de structure arrière pour un deux-roues, en particulier pour une bicyclette selon l'une quelconque des revendications précédentes, comprenant une tête de montage (20, 70) pouvant être reliée au deux-roues ainsi qu'un appui (12) en forme de barre monté dans la tête de montage (20, 70) de manière à pouvoir pivoter, dans lequel :
la tête de montage (20, 70) est reliée de manière détachable à une partie arrière du deux-roues,
la liaison entre le support de structure arrière et la partie arrière du deux roues comprend au moins deux surfaces de contact,
au moins deux des surfaces de contact entre le support de structure arrière et la zone arrière du deux-roues sont situées en vis-à-vis et
au moins l'une des surfaces de contact se situe de préférence dans un plan, lequel s'étend perpendiculairement à l'horizontale,
et **caractérisé en ce que** :
la tête de montage (20, 70) comprend au moins une partie saillante (31, 81) du type tourillon, laquelle fait saillie à l'intérieur d'un évidement diamétralement opposé de la patte d'extrémité (32, 72), le support de structure arrière (10) étant réalisé en plusieurs parties et comportant, en plus de la tête de montage (20), une plaque de fixation (30), et la tête de montage (20) et la plaque de fixation (30) constituant la bride en forme de u.

10. Dispositif d'appui de support de structure arrière pour un deux-roues selon la revendication 9, **caractérisé en ce qu'**il est conçu selon l'une quelconque des revendications 2 à 8.
